# EUROPEAN PATENT APPLICATION

(11) **EP 4 763 929 A1**
(43) Date of publication of application: **24.06.2026**
(21) Application number: 25169088.9
(22) Date of filing: 08.04.2025
(51) Int. Cl.: C09D 129/04, C09D 129/14, C09J 129/04, C09J 129/14, B32B 27/36

(54) **ADHESIVE AND BARRIER LAYER CONTAINING THE SAME, HIGHLY TRANSPARENT FLEXIBLE HIGH-BARRIER FILM, AND ENCAPSULATING AND DISPLAY FILM MATERIAL**

(30) Priority: 17.12.2024 CN 202411862740
(71) Applicant: Lucky Huaguang Graphics Co., Ltd, Henan 473003 (CN)
(72) Inventor: SONG, Xiaowei, NANYANG CITY, 473003 (CN); WANG, Xu, NANYANG CITY, 473003 (CN); GAO, Yingxin, NANYANG CITY, 473003 (CN); LI, Jing, NANYANG CITY, 473003 (CN); LI, Yibing, NANYANG CITY, 473003 (CN); MENG, Xian, NANYANG CITY, 473003 (CN); NIE, Bing, NANYANG CITY, 473003 (CN); LIU, Xiaolei, NANYANG CITY, 473003 (CN); WEI, Dongyue, NANYANG CITY, 473003 (CN); YANG, Shixuan, NANYANG CITY, 473003 (CN)
(74) Representative: Cabinet Beau de Loménie

(57) **Abstract**

The present invention provides an adhesive and a barrier layer containing the same, a highly transparent flexible high-barrier film, and an encapsulating and display film material. According to the adhesive provided in this application, epoxycyclohexyl siloxane has high activity and a good cross-linking property. Components amino siloxane and epoxycyclohexyl siloxane are subjected to thermal cross-linking reaction to form a three-dimensional silicon structure in a film layer formed by polyvinyl alcohol film-forming resin, thereby effectively filling molecular gaps of the polyvinyl alcohol film-forming resin, greatly improving the effect of water and oxygen resistance. In addition, the scratch-resistant ability of the film layer formed by the polyvinyl alcohol film-forming resin can be further enhanced. The reaction between epoxidized hydroxyl-terminated polybutadiene and other components in the adhesive can not only increase the water- and oxygen-resistant ability of the film layer formed by the polyvinyl alcohol film-forming resin, but also effectively improve the flexibility of the film layer at low temperature.

## Description

### TECHNICAL FIELD

The present invention relates to the technical field of high-performance film materials, and specifically to an adhesive and a barrier layer containing the same, a highly transparent flexible high-barrier film, and an encapsulating and display film material.

### BACKGROUND

Polymer film materials are widely used in various fields. However, due to the existence of molecular gaps between the polymers in polymer film materials, the penetration of water molecules and oxygen molecules with relatively small molecular volumes cannot be completely blocked. Therefore, in manufacturing fields such as food processing, pharmaceutical encapsulating, aerospace, photovoltaic industry, new-energy batteries, display materials, and electronic product encapsulating, polymer film materials with high-barrier properties are required to avoid affecting the performance of products. Especially in high-end manufacturing fields such as aerospace, perovskite photovoltaic products, quantum dot films, and chip manufacturing, the polymer film materials needed not only have extremely high requirements for the barrier properties against small molecules such as water and oxygen, but also have high requirements for the transparency and flexibility of high-barrier film materials. Therefore, there is an urgent need to develop highly transparent flexible film materials with superior barrier properties against water vapor and oxygen.

Currently, the methods adopted in the prior art are as follows. Multilayer composite technology: for example, the Dutch Shell patent US728,004 19850429 and Jiangsu Woyuan patent CN202220521066.5 adopt multilayer composite technology for two or several films with different barrier properties. This technology delays the penetration time of small molecules by increasing their diffusion paths. However, small molecules will still penetrate the film layer after long-term use. Moreover, multilayer composite films are prone to issues such as bubbles, cracks, and wrinkles during production, which ultimately affects the barrier properties of the films.

Biaxial stretching technology: for example, the DuPont patent EP9840132119980603 adopts biaxial stretching to improve the order of molecular chains and make the stacking more compact to achieve the purpose of blocking small molecules. However, its drawback is that after high-temperature biaxial stretching, the crystallization stresses in the longitudinal and transverse directions are inconsistent during the cooling process, which easily leads to crystal dislocation defects and creates pathways for molecular penetration, resulting in a decline in barrier properties. Moreover, molecular gaps still exist only by stretching, and finally, the barrier properties cannot be guaranteed.

Coating technology: a barrier layer is coated on the surface of the film. One method is to coat a metal film. For example, in the barrier film and photovoltaic cell described in CN201821178089.0, the barrier property of the film are improved, but the film is opaque, and visible light, laser, electron beam, microwave, etc. cannot penetrate the film, which affects the subsequent processing. The other method is to coat an inorganic oxide. For example, in the Toppan Printing patent CN93120385 from Japan, although transparency is achieved, the barrier property of the film relying solely on the inorganic coating is still not high, and the inorganic coating is brittle and easily scratched.

### SUMMARY

In order to solve the above problems, the present invention provides an adhesive and a barrier layer containing the same, a highly transparent flexible high-barrier film, and an encapsulating and display film material. According to the adhesive provided in this application, epoxycyclohexyl siloxane has high activity and a good cross-linking property. Components amino siloxane and epoxycyclohexyl siloxane are subjected to thermal cross-linking reaction to form a three-dimensional silicon structure in a film layer formed by polyvinyl alcohol film-forming resin, thereby effectively filling molecular gaps of the polyvinyl alcohol film-forming resin, greatly improving the effect of water and oxygen resistance. In addition, the scratch-resistant ability of the film layer formed by the polyvinyl alcohol film-forming resin can be further enhanced. The reaction between epoxidized hydroxyl-terminated polybutadiene and other components in the adhesive can not only increase the water- and oxygen-resistant ability of the film layer formed by the polyvinyl alcohol film-forming resin, but also effectively improve the flexibility of the film layer at low temperature.

The objectives of the present invention are achieved in the following ways:
An adhesive, comprising a component A: polyvinyl alcohol film-forming resin, a component B: amino siloxane, a component C: epoxycyclohexyl siloxane, and a component D: epoxidized hydroxyl-terminated polybutadiene.
Calculated by molar ratio, the number of moles of active hydrogen of amino groups to the number of moles of epoxy groups in adhesive components is 1:1.
The polyvinyl alcohol film-forming resin is polyvinyl butyral, a structural formula of the amino siloxane is as follows: 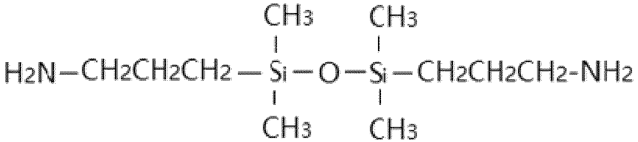 and a structural formula of the epoxycyclohexyl siloxane is as follows: 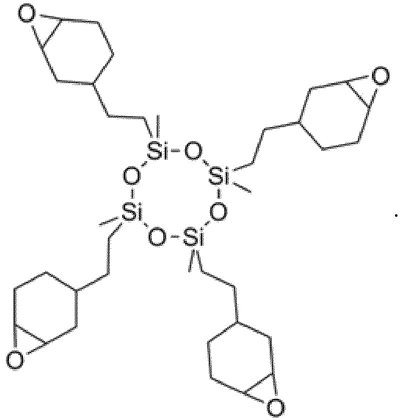
Based on a total weight percentage of a sum of the component A, the component B and the component C: the component A accounts for 60-90%, a sum of the component B and the component C accounts for 10-40%, and an addition amount of a reinforcing resin component D is 1-5% of a total weight of the sum of the component A, the component B and the component C;
   a molecular weight of the polyvinyl butyral is 70,000-25,000, and a degree of acetalization is 79-93%; and
   a weight-average molecular weight of the epoxidized hydroxyl-terminated polybutadiene is 2,000-4,000.
The adhesive further comprises a diluent; and the diluent is an alcohol solvent and an ester solvent.
The barrier layer is formed after coating the adhesive according to any one of claims 1-5 and then subjecting the adhesive to thermal cross-linking, and a temperature of the thermal cross-linking is 80-120°C.
A highly transparent flexible high-barrier film, comprising a polymer substrate, an undercoat layer, a silicon oxide deposition layer, and a barrier layer in sequence from bottom to top, wherein the barrier layer is the barrier layer.
A material of the polymer substrate is polyethylene terephthalate, polyethylene naphthalate, polycarbonate, polyamide, polyethylene, or polypropylene, and a thickness of the substrate is 10-150 µm;
   the undercoat layer comprises linear silicon-containing polyurethane resin without a benzene ring structure;
   the silicon oxide deposition layer is a silicon dioxide deposition layer formed by plasma-enhanced chemical vapor deposition, and has a thickness of 40-80 nm; and
   a coating amount of the barrier layer is 1-2 g/m², and a drying temperature thereof is 80-100°C.
The linear silicon-containing polyurethane resin without a benzene ring structure is a polyurethane adhesive obtained by polymerizing dicyclohexylmethane diisocyanate with a polyether diol and dihydroxyl-terminated organosilicon, and then chain-extending with dimethylolpropionic acid and terminating with silanol, and has a coating amount of 1-2 g/m²; and
   a thickness of the silicon oxide deposition layer is 50-60 nm.
An encapsulating and display film material, wherein the encapsulating and display material is an encapsulating and display material manufactured from the high-barrier film.

Compared with the prior art, the present invention provides an adhesive and a barrier layer containing the same, a highly transparent flexible high-barrier film, and an encapsulating and display film material. According to the adhesive provided in this application, epoxycyclohexyl siloxane has high activity and a good cross-linking property. Components amino siloxane and epoxycyclohexyl siloxane are subjected to thermal cross-linking reaction to form a three-dimensional silicon structure in a film layer formed by polyvinyl alcohol film-forming resin, thereby effectively filling molecular gaps of the polyvinyl alcohol film-forming resin, greatly improving the effect of water and oxygen resistance. In addition, the scratch-resistant ability of the film layer formed by the polyvinyl alcohol film-forming resin can be further enhanced. The reaction between epoxidized hydroxyl-terminated polybutadiene and other components in the adhesive can not only increase the water- and oxygen-resistant ability of the film layer formed by the polyvinyl alcohol film-forming resin, but also effectively improve the flexibility of the film layer at low temperature. Moreover, the adhesive of the present application, after cross-linking, and the barrier layer formed therefrom not only have good barrier properties against water vapor and oxygen, but also exhibit high transparency, good flexibility, low ultraviolet absorbance, and resistance to yellowing, and have good scratch-resistant abilities.

When the adhesive serves as the barrier layer of the highly transparent flexible high-barrier film, the components amino siloxane and epoxycyclohexyl siloxane can increase the binding force with a silicon dioxide deposition layer.

In order to achieve high transparency, flexibility, and high-barrier properties, for the highly transparent flexible high-barrier film provided in the present invention: the barrier properties against water vapor and oxygen are achieved by adopting a linear silicon-containing polyurethane layer without a benzene ring structure, silicon dioxide formed by plasma-enhanced chemical vapor deposition, and a transparent and flexible silane-epoxy cross-linked barrier layer technology. The linear silicon-containing polyurethane undercoat layer without a benzene ring structure has low ultraviolet absorption and does not yellow. It offers better transparency and flexibility compared with a thermosetting undercoat layer. The silicon-containing structure in the polyurethane undercoat layer facilitates the subsequent deposition of silicon dioxide, enhancing the fastness of the deposition layer. The silicon dioxide deposition layer is a plasma-enhanced chemical vapor-deposited silicon dioxide layer. It features high transparency and excellent barrier properties against water vapor and oxygen. The barrier layer of the present invention not only exhibits good barrier properties against water vapor and oxygen, high transparency, and excellent flexibility, but also has strong bonding force with the silicon dioxide deposition layer, which can protect the fragile silicon dioxide deposition layer.

### BRIEF DESCRIPTION OF THE DRAWINGS

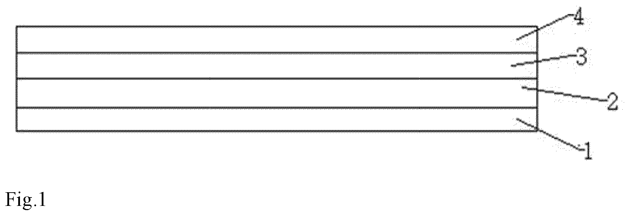

FIG. 1 is a schematic structural diagram of a highly transparent flexible high-barrier film of the present invention.

1. polymer substrate; 2. undercoat layer; 3. silicon dioxide deposition layer; and 4. barrier layer.

### DESCRIPTION OF THE EMBODIMENTS

An adhesive is provided, including a component A: polyvinyl alcohol film-forming resin, a component B: amino siloxane, a component C: epoxycyclohexyl siloxane, and a component D: epoxidized hydroxyl-terminated polybutadiene.

Components amino siloxane and epoxycyclohexyl siloxane are subjected to thermal cross-linking reaction to form a three-dimensional silicon structure in a film layer formed by polyvinyl alcohol film-forming resin, thereby effectively filling molecular gaps of the polyvinyl alcohol film-forming resin, improving the effect of water and oxygen resistance. In addition, the scratch-resistant ability of the film layer formed by the polyvinyl alcohol film-forming resin can be further enhanced. The reaction between epoxidized hydroxyl-terminated polybutadiene and other components in the adhesive can not only increase the water- and oxygen-resistant ability of the film layer formed by the polyvinyl alcohol film-forming resin, but also effectively improve the flexibility of the film layer at low temperature.

Calculated by molar ratio, an optimal ratio of the number of moles of active hydrogen of amino groups to the number of moles of epoxy groups in adhesive components is 1:1.

The polyvinyl alcohol film-forming resin can be polyvinyl acetal, and preferably polyvinyl butyral. Polyvinyl butyral has excellent film-forming properties, with high transparency and good flexibility of the film layer. Compared with polyvinyl alcohol, polyvinyl butyral has better moisture resistance, and good water barrier properties against vapor and oxygen. Meanwhile, it also has good light resistance, heat resistance, and cold resistance. It contains a large number of hydroxyl and aldehyde functional groups that form hydrogen-bond associations with the surface of silicon dioxide, so it has high adhesion at the silicon dioxide interface.

For the component A, polyvinyl butyral with a high molecular weight and a high acetalization degree is selected to improve its moisture resistance. Polyvinyl butyral has a molecular weight of 70,000-250,000 and an acetalization degree of 79-93%.

A structural formula of amino siloxane is as follows:

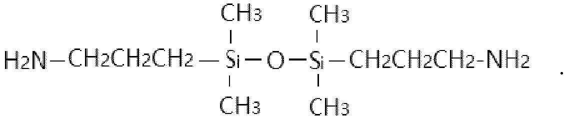

The component B contains siloxane diamine, without ester bonds and ether bonds. The silicon-oxygen bond has the glass-like transparency of silicone. In addition, a terminal amino group can undergo an epoxy cross-linking reaction with the component C of the adhesive, improving the adhesion and barrier properties of the barrier layer.

A structural formula of epoxycyclohexyl siloxane is as follows:

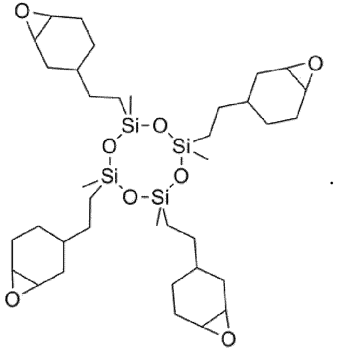

The component C is tetraepoxycyclohexyl siloxane. Since epoxy groups connected to four cyclohexyl groups have high-efficiency cross-linking properties, they undergo a three-dimensional cross-linking reaction with amino groups in the component B (siloxane-containing diamine), which can greatly improve the adhesion and barrier properties of the barrier layer.

The component B (siloxane-containing diamine) and the component C (tetraepoxycyclohexyl siloxane) can form a dense silicon-containing film with polyvinyl butyral. Silicon atoms can effectively fill the voids between polyvinyl butyral molecules, effectively preventing the penetration of water vapor and oxygen. Meanwhile, a siloxane structure in the barrier layer has a good affinity with a silicon dioxide deposition layer of the high-barrier film, so the barrier layer is not prone to falling off during subsequent use.

The component D (epoxidized hydroxyl-terminated polybutadiene) is a reactive liquid rubber with excellent hydrophobic properties and low-temperature flexibility. Epoxidized hydroxyl-terminated polybutadiene can undergo a cross-linking reaction with amino siloxane, showing excellent water-resistant performance, enhancing the compactness of the film and improving the water vapor barrier property of the film layer. At the same time, its elastic butadiene structure can effectively improve the flexibility of the film at low temperature, which is beneficial for the high-barrier film to still have excellent flexibility when used in extremely cold regions. A weight-average molecular weight of the component D (epoxidized hydroxyl-terminated polybutadiene) is 2000-4000.

Main components of the adhesive are all transparent and also have relatively high flexibility.

For the adhesive, based on a total weight percentage of a sum of the component A, the component B and the component C: the component A accounts for 60-90%, a sum of the component B and the component C accounts for 10-40%, and an addition amount of the component D is 1-5% of a total weight of the sum of the component A, the component B and the component C.

To facilitate coating and film formation of the adhesive, the adhesive also contains a diluent. The diluent is preferably an alcohol solvent and an ester solvent, and the preferred solvents are ethanol, n-propanol, isopropanol, ethyl acetate, butyl acetate, etc., which have very low toxicity and are environmentally friendly.

A coating amount of the high-barrier film in the present invention refers to grams of solid substances per square meter of the coated film layer, excluding solvent components.

A barrier layer is provided, where the barrier layer is formed after the above adhesive is coated to form a film and then thermally cross-linked.

A coating amount of the barrier layer is 1-2 g/m², and a drying temperature thereof is 80-120°C.

As shown in FIG. 1, a highly transparent flexible high-barrier film includes a polymer substrate 1, an undercoat layer 2, a silicon oxide deposition layer 3, and a barrier layer 4 in sequence from bottom to top. A barrier layer above the silicon oxide deposition layer 3 is the above barrier layer.

First, the polymer substrate of the highly transparent flexible high-barrier film of the present invention is described.

The polymer substrate of the highly transparent flexible high-barrier film of the present invention is a film made of an organic polymer material. The film can be a single-layer or multi-layer film made of one or several polymer materials through methods such as casting, stretching, coextrusion, and blow-molding. Necessary functional additives such as a plasticizer and an antistatic agent can also be incorporated. The polymer materials include polyethylene terephthalate (PET), polyethylene naphthalate (PEN), polycarbonate (PC), polyamide (PA), polyimide (PI), polyethylene (PE), polypropylene (PP), polyvinyl alcohol (PVA), ethylenevinyl alcohol copolymer (EVOA), polyvinyl chloride (PVC), polyvinylidene chloride (PVDC), fluorinated polyethylene and other polymer materials. The polymer substrate of the highly transparent flexible high-barrier film of the present invention is preferably a film made of polymer materials such as polyethylene terephthalate, polyethylene naphthalate, polycarbonate, polyamide, polyethylene, and polypropylene. Such film materials have good flexibility and light-transmittance. A thickness of the polymer substrate of the high-barrier film of the present invention is preferably 10-150 µm.

Next, the undercoat layer of the high-barrier film of the present invention is described.

The undercoat layer of the high-barrier film can improve the bonding fastness between the polymer substrate and the silicon dioxide deposition layer, and at the same time, it can enhance the gas barrier effect of the film. The undercoat layer can be selected from acrylic resin, polyester resin, phenolic resin, epoxy resin, polyurethane resin, silane resin, silicone resin, nitrile rubber, etc. In the present invention, linear silicon-containing polyurethane resin without a benzene ring structure is selected for the undercoat layer. It is an adhesive prepared from isocyanate and a hydroxyl compound. Preferably, it is polyurethane obtained by polymerizing dicyclohexylmethane diisocyanate with a polyether diol (for example, polypropylene glycol PPG (2000) is a kind of polyether diol) and dihydroxyl-terminated organosilicon, and then chain-extending with dimethylolpropionic acid and terminating with silanol. It has good transparency, flexibility and adhesion. Moreover, it does not contain a benzene ring, has low ultraviolet absorption and is not prone to yellowing. It contains polyether segments and silicone, and has good barrier properties and strong fastness with the silicon dioxide deposition layer. A coating amount of the undercoat layer is 1-2 g/m².

Next, the silicon oxide deposition layer of the highly transparent flexible high-barrier film of the present invention is described.

The highly transparent flexible high-barrier film of the present invention is provided with the silicon oxide deposition layer. The silicon dioxide film has a series of excellent physical and chemical properties, such as good high-temperature stability, chemical stability, low permeability and gas barrier performance. At the same time, it also has high transparency and a low refractive index, which can meet the requirements of the electronics industry for high precision and high transparency. The silicon oxide deposition layer of the high-barrier film of the present invention is a silicon dioxide deposition layer formed by plasma-enhanced chemical vapor deposition (PECVD). Based on the principle of magnetic field confinement of charged particles, the PECVD technology uses a magnetic field to confine electrons to increase the dissociation rate of gas molecules, thereby achieving the purpose of increasing the film deposition rate. A mixed gas of an organosilicon compound and oxygen is used to deposit a silicon oxide film. An optional organosilicon compound includes hexamethyldisiloxane, tetramethoxysilane, tetraethoxysilane, dimethyldimethoxysilane, dimethyldiethoxysilane, diethyldimethoxysilane, diphenyldimethoxysilane, methyltriethoxysilane, ethyltrimethoxysilane, tetramethylsilane, etc., and preferably hexamethyldisiloxane. When a thickness of the silicon dioxide deposition layer is less than 30 nm, the gas barrier property of the film material decreases significantly. When a thickness of the silicon dioxide deposition layer is greater than 100 nm, the curlability and transparency of the film material are affected. Therefore, the thickness of the silicon dioxide deposition layer of the high-barrier film of the present invention is 40-80 nm, and preferably 50-60 nm.

Finally, the barrier layer on the silicon oxide deposition layer of the highly transparent flexible high-barrier film is described.

This barrier layer is characterized by high transparency and good flexibility. The component polyvinyl butyral has excellent film-forming properties, and the formed film layer has high transparency and good flexibility.

Epoxycyclohexyl siloxane has high activity and a good crosslinking property. Components amino siloxane and epoxycyclohexyl siloxane are subjected to thermal crosslinking reaction to form a three-dimensional silicon structure in a film layer formed by polyvinyl alcohol film-forming resin, thereby effectively filling molecular gaps of the polyvinyl alcohol film-forming resin, greatly improving the effect of water and oxygen resistance. In addition, the scratch-resistant ability of the film layer formed by the polyvinyl alcohol film-forming resin can be further enhanced. The reaction between epoxidized hydroxyl-terminated polybutadiene and other components in the adhesive can not only increase the water- and oxygen-resistant ability of the film layer formed by the polyvinyl alcohol film-forming resin, but also effectively improve the flexibility of the film layer at low temperature.

The adhesive of the present application, after cross-linking, and the barrier layer formed therefrom not only have good barrier properties against water vapor and oxygen, but also exhibit high transparency, good flexibility, low ultraviolet absorbance, and resistance to yellowing, and have good scratch-resistant abilities. The components of the barrier layer are all transparent, and also have high flexibility and resistance to yellowing.

When the adhesive serves as the barrier layer of the highly transparent flexible high-barrier film, the components amino siloxane and epoxycyclohexyl siloxane can increase the binding force with a silicon dioxide deposition layer. In particular, the epoxycyclohexyl siloxane has high activity and a good cross-linking property, which can improve the binding force between the barrier layer and the silicon oxide deposition layer, and protect the fragile silicon oxide deposition layer.

The barrier layer of the present invention is usually coated by techniques known in the art, such as knife coating, blade coating, strip coating, roll coating, and press coating. A coating amount is 0.5-2 g/m², and a drying temperature is 80-120°C.

The present invention will be specifically described below in conjunction with specific examples. It is necessary to point out here that these examples are only used for further explanation of the present invention and should not be construed as limiting the scope of protection of the present invention. Those skilled in the art can make some non-essential improvements and adjustments according to the above content of the present invention.

### Main raw materials can be obtained from the following companies.

Polymer substrates: polyethylene terephthalate (PET), polyethylene naphthalate (PEN), polycarbonate (PC), polyamide (PA), polyethylene (PE), and polypropylene (PP) films are all from Xiamen Changsu. Dicyclohexylmethane diisocyanate (HMDI) is available from Covestro in Germany. Polypropylene glycol PPG (2000) is available from Jiangsu Petrochemical Co., Ltd. Dihydroxyl-terminated organosilicon is available from Guangzhou Silok New Materials Co., Ltd. Tris(tert-pentyloxy)silanol, hexamethyldisiloxane, triethylenediamine, dimethylolpropionic acid, dimethylacetamide, and the component C (tetraepoxycyclohexyl siloxane) are available from Merck. Polyvinyl butyral is available from the Butvar^{®} products of Monsanto in the United States. The component B containing siloxane diamine is available from Aladdin Biochemical Technology Co., Ltd. The component D (epoxidized hydroxyl-terminated polybutadiene) is available from Liming Research Institute of Chemical Industry. Ethylene glycol methyl ether is available from Jiangsu Tianyin Chemical Industry Co., Ltd.

**Preparation of the undercoat layer polyurethane adhesive:** 26.35 g of dicyclohexylmethane diisocyanate, 55 g of polypropylene glycol PPG (molecular weight 2000), 5 g of dihydroxyl-terminated organosilicon (molecular weight 4000), and 1 g of triethylenediamine are added into a 1000 ml four-necked flask equipped with temperature-controlled heating, mechanical stirring, a drying tube, a reflux condenser, and a nitrogen protection device. The reaction is carried out at 80°C for 3 hours. Then, 120.72 g of dimethylolpropionic acid and 93.5 g of dimethylacetamide are added, and the reaction continues for 3 hours. Next, 24.52 g of tris(tert-pentyloxy)silanol is added and the reaction lasts for 2 hours. Afterwards, the temperature is lowered to end the reaction. The reaction stock solution is dropped into deionized water containing glacial acetic acid for dispersion, washed multiple times with deionized water, filtered, and then dried. Then, a 10% coating solution is formulated with ethylene glycol methyl ether. The formulated coating solution is the undercoat layer polyurethane adhesive, coded as PU.

**Adhesive formulation:** adhesives are generally formulated immediately before use and stored at 5°C. It is best to use them up within 4 hours. The adhesives are coded as N1-N4.

Adhesive N1: 90 g of the component A (polyvinyl butyral, Butvar^{®} B-90, Mw = 70,000-100,000, acetalization degree: 79-81%), 2.52 g of the component B compound, 7.48 g of the component C compound, 1 g of the component D compound (Mw = 4000). The diluent is a mixture of ethanol and ethyl acetate with a mass ratio of 1:1, and the dilution concentration is 20%.

Adhesive N2: 80 g of the component A (polyvinyl butyral, Butvar^{®} B-76, Mw = 90,000-120,000, acetalization degree: 83-93%), 5.04 g of the component B compound, 14.96 g of the component C compound, 3 g of the component D compound (Mw = 4000). The diluent is a mixture of n-propanol and ethyl acetate with a mass ratio of 1:1, and the dilution concentration is 20%.

Adhesive N3: 70 g of the component A (polyvinyl butyral, Butvar^{®} B-74, Mw = 120,000-150,000, acetalization degree: 79-81%), 7.56 g of the component B compound, 22.44 g of the component C compound, 4 g of the component D compound (Mw = 3000). The diluent is a mixture of isopropanol and ethyl acetate with a mass ratio of 1:1, and the dilution concentration is 20%.

Adhesive N4: 60 g of the component A (polyvinyl butyral, Butvar^{®} B-72, Mw = 170,000-2500.000, acetalization degree: 80%), 10.08 g of the component B compound, 29.92 g of the component C compound, 5 g of the component D compound (Mw = 2000). The diluent is a mixture of ethanol and butyl acetate with a mass ratio of 1:1, and the dilution concentration is 20%.

Manufacturing examples of the highly transparent flexible high-barrier film are as follows.

### Example 1:

1. the coated surface of a 12-µm polyethylene terephthalate film as the polymer substrate was subjected to corona treatment;
2. the above undercoat layer polyurethane adhesive PU was coated on the polymer substrate after corona treatment, with a coating amount of 1 g/m²; and
3. plasma-enhanced chemical vapor deposition of silicon dioxide: the substrate that was corona-treated and coated with the polyurethane adhesive was used to deposit silicon dioxide by a winding plasma-enhanced chemical vapor deposition (PECVD) device. Under the action of the radio-frequency electrode in the vacuum chamber, the substrate was activated by argon plasma. Then, hexamethyldisiloxane vapor and O₂ were introduced. Under the action of the arc, the hexamethyldisiloxane vapor and O₂ were subjected to a chemical reaction to generate gaseous silicon dioxide, which was finally deposited on the substrate, with a thickness of the deposition layer of 55 nm.

4. the adhesive N1 was coated on the silicon dioxide deposition layer of the polymer substrate that underwent the PECVD of silicon dioxide. The coating amount of the barrier layer was 1 g/m², and the drying temperature was 110°C.

### Examples 2-12:

With reference to the manufacturing process of the high-barrier film in Example 1, the high-barrier films of Examples 2-12 were prepared by changing the parameters of the polymer substrate, undercoat layer, silicon oxide deposition layer, and barrier layer according to the data given in Table 1 (the manufacturing parameter table of the high-barrier film).

### Comparative Examples 1-6:

With reference to the manufacturing process of the high-barrier film in Example 1, the high-barrier films of Comparative Examples 1-6 were prepared by changing the parameters of the polymer substrate, undercoat layer, silicon oxide deposition layer, and barrier layer according to the data given in Table 1.

The preparation of the silicon dioxide deposition layer without plasma in Comparative Example 4 was as follows: the substrate that was corona-treated and coated with the polyurethane adhesive was used to deposit silicon dioxide by a winding PECVD device. The process of activating the substrate with argon plasma was cancelled, and only hexamethyldisiloxane vapor and O₂ were introduced. Under the action of the arc, the hexamethyldisiloxane vapor and O₂ were subjected to a chemical reaction to generate gaseous silicon dioxide, which was finally deposited on the substrate, with a thickness of the deposition layer of 60 nm.

The performance of the high-barrier films in the above examples and comparative examples was evaluated according to the following test methods.
1. Determination of the film coating thickness:
   according to the national standard GB/T33051-2016 "Method for Determining the Thickness of Hardened Layer of Surface Hardened Films of Optical Functional Films", the determination is performed using an F20-UV optical film thickness measuring instrument manufactured by Filmetrics Company in the United States.
2. Determination of the film light transmittance (T):
   according to the national standard GB/T 2410-2008 "Determination of Light Transmittance and Haze of Transparent Plastics Using a Haze Meter",
   the testing is performed using an M57D instrument manufactured by DIFFUSION Company in the UK.
3. Determination of the film oxygen transmission rate (OTR):
   according to the oxygen transmission rate (OTR) test method described in the ASTM D3985 standard, the testing is performed using an OX-TRAN^{®} 2/48 oxygen transmission rate analyzer manufactured by MOCON in the United States.
4. Determination of the film water vapor transmission rate (WVTR): according to the water vapor transmission rate (WVTR) test method described in the ASTM F1249 standard, the water vapor transmission rate (WVTR) is tested using a PERMATRAN-W 3/34 WVTR analyzer manufactured by MOCON in the United States.
5. Determination of the film coating adhesion:
   the adhesion is tested according to the cross-cut method of the international standard ISO 2409, and the adhesion is rated on a six-level scale from 0 to 5, with 0 being the worst and 5 being the best.
6. Determination of the low-temperature flexibility of the film coating:
   the film sample is placed in an environment at -50°C. A 10 cm × 10 cm film sample is taken and, by using a film bending machine (in a natural state, the two ends of the front side of the film sample are folded together and then immediately released, and then the two ends of the back side are folded together. The time for 1 alternate folding of the front and back sides is 0.8 seconds, and each time a front-back folding is completed, it is counted as 1 cycle), the film sample is folded back and forth transversely 500 times. Then the folding direction of the film is changed, and the film is folded back and forth longitudinally 500 times. Subsequently, its water vapor barrier performance is measured, and the flexibility is scored according to the degree of decline in the water vapor barrier property. The score is on a scale from 1 to 10, with 1 indicating the worst flexibility and 10 indicating the best flexibility.

The performance evaluation results of the high-barrier films in the examples and comparative examples are shown in Table 2 "Performance evaluation table of high-barrier films".

**Table 1 Manufacturing parameter table of high-barrier films**

| Sample | Polymer substrate | | Undercoat layer | | Silicon dioxide layer | Barrier layer | | |
|---|---|---|---|---|---|---|---|---|
| | Type | Thickn ess (µm) | Type | Coating amount (g/m²) | Thickness (µm) | Type | Coating amount (g/m²) | Drying temperature (° C) |
| Example 1 | PET | 10 | PU | 2 | 40 | N1 | 2 | 110 |
| Example 2 | PET | 12 | PU | 1.5 | 60 | N2 | 1.5 | 90 |
| Example 3 | PET | 12 | PU | 1 | 80 | N3 | 1 | 80 |
| Example 4 | PET | 125 | PU | 3 | 80 | N4 | 2 | 120 |
| Example 5 | PEN | 12 | PU | 2 | 60 | N3 | 2 | 80 |
| Example 6 | PEN | 125 | PU | 2 | 80 | N4 | 2 | 90 |
| Example 7 | PC | 12 | PU | 2 | 60 | N2 | 2 | 90 |
| Example 8 | PC | 150 | PU | 2 | 60 | N4 | 2 | 90 |
| Example 9 | PA | 50 | PU | 2 | 55 | N3 | 2 | 80 |
| Example 10 | PA | 80 | PU | 2 | 55 | N4 | 2 | 90 |
| Example 11 | PE | 100 | PU | 1 | 55 | N3 | 1 | 80 |
| Example 12 | PP | 30 | PU | 1.5 | 55 | N4 | 1.5 | 90 |
| Comparative Example 1 | PET | 10 | None | - | 40 | N1 | 2 | 110 |
| Comparative Example 2 | PET | 12 | PU | 1.5 | 60 | None | - | - |
| Comparative Example 3 | PET | 12 | PU | 1 | 80 | PV B | 1 | 80 |
| Comparative Example 4 | PC | 12 | PU | 2 | No plasma 60 | N2 | 2 | 90 |
| Comparative Example 5 | PEN | 12 | None | - | 60 | None | - | - |
| Comparative Example 6 | PA | 50 | None | - | None | None | - | - |

**Table 2 Performance parameter table of high-barrier films**

| Sample | Light transmittance T (%) | ORT (cc/m².day) | WVTR (g/m².day) | Adhesion score | Low-temperature flexibility score |
|---|---|---|---|---|---|
| Example 1 | 91 | 0.08 | 0.07 | 5 | 10 |
| Example 2 | 90 | 0.07 | 0.07 | 5 | 10 |
| Example 3 | 90 | 0.08 | 0.06 | 4 | 9 |
| Example 4 | 89 | 0.009 | 0.007 | 4 | 9 |
| Example 5 | 93 | 0.03 | 0.02 | 5 | 10 |
| Example 6 | 91 | 0.003 | 0.002 | 4 | 8 |
| Example 7 | 93 | 0.07 | 0.06 | 5 | 10 |
| Example 8 | 92 | 0.001 | 0.001 | 5 | 9 |
| Example 9 | 90 | 0.005 | 0.004 | 4 | 8 |
| Example 10 | 88 | 0.002 | 0.003 | 5 | 8 |
| Example 11 | 91 | 0.01 | 0.02 | 5 | 10 |
| Example 12 | 89 | 0.05 | 0.06 | 5 | 9 |
| Comparative Example 1 | 92 | 1.20 | 1.15 | 3 | 6 |
| Comparative Example 2 | 91 | 0.50 | 0.49 | 3 | 3 |
| Comparative Example 3 | 91 | 0.25 | 0.20 | 4 | 3 |
| Comparative Example 4 | 94 | 0.08 | 0.07 | 3 | 5 |
| Comparative Example 5 | 92 | 1.20 | 1.35 | 2 | 2 |
| Comparative Example 6 | 91 | 0.98 | 1.14 | 5 | 1 |

The performance comparison results of the examples and comparative examples in Table 2 show that, compared with other high-barrier films, the polymer flexible high-barrier film manufactured by the technology of the present invention can achieve better results in important indicators such as light transmittance, oxygen transmission rate, water vapor transmission rate, film layer adhesion, and low-temperature flexibility. The present invention achieves its objectives through an overall solution: high-transparency flexible polymer materials such as polyethylene terephthalate, polyethylene naphthalate, polycarbonate, polyamide, polyethylene, and polypropylene are adopted as the polymer substrate. Flexible silicon-based polyurethane without a benzene ring is adopted for the undercoat layer, which has good barrier properties and high fastness with the silicon dioxide deposition layer. Plasma-enhanced chemical vapor deposition of silicon dioxide is adopted for the silicon oxide deposition layer, which has good transparency, adhesion, and barrier properties. The adhesive that cross-links amino siloxane, epoxycyclohexyl siloxane, and epoxidized hydroxyl-terminated polybutadiene to enhance polyvinyl butyral is adopted for the barrier layer, which not only has good transparency and flexibility, but also the silicon atoms can effectively fill the voids between molecules, effectively preventing the penetration of water vapor and oxygen. The silicon-cross-linked polyvinyl butyral adhesive also has strong binding force with the silicon dioxide deposition layer, which can protect the fragile silicon dioxide deposition layer. The film layer enhanced by polybutadiene has better barrier properties and flexibility at low temperature.

The high-barrier film provided by the present invention has excellent barrier properties against gas and water vapor, can be used to manufacture oxygen-resistant and water-vapor-resistant packaging materials, and can be applied in fields such as food packaging, pharmaceutical packaging, electronic product encapsulating, perovskite photovoltaic cell films, and quantum dot display films.

The above are only the preferred embodiments of the present invention, but the scope of protection of the present invention is not limited thereto. It should be noted that for those skilled in the art and any person skilled in the art, equivalent substitutions or changes, as well as several changes and improvements made according to the technical solutions and inventive concepts of the present invention without departing from the overall concept of the present invention should also be regarded as falling within the scope of protection of the present invention.

## Claims

1. An adhesive, comprising a component A: polyvinyl alcohol film-forming resin, a component B: amino siloxane, a component C: epoxycyclohexyl siloxane, and a component D: epoxidized hydroxyl-terminated polybutadiene.

2. The adhesive according to claim 1, wherein calculated by molar ratio, the number of moles of active hydrogen of amino groups to the number of moles of epoxy groups in adhesive components is 1:1.

3. The adhesive according to claim 1, wherein the polyvinyl alcohol film-forming resin is polyvinyl butyral, a structural formula of the amino siloxane is as follows: 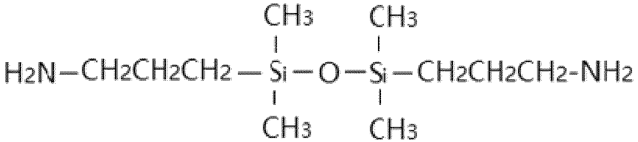 and a structural formula of the epoxycyclohexyl siloxane is as follows:

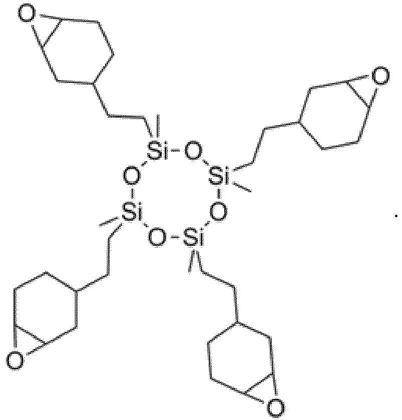

4. The adhesive according to claim 3, wherein based on a total weight percentage of a sum of the component A, the component B and the component C: the component A accounts for 60-90%, a sum of the component B and the component C accounts for 10-40%, and an addition amount of a reinforcing resin component D is 1-5% of a total weight of the sum of the component A, the component B and the component C;
a molecular weight of the polyvinyl butyral is 70,000-25,000, and a degree of acetalization is 79-93%; and
a weight-average molecular weight of the epoxidized hydroxyl-terminated polybutadiene is 2,000-4,000.

5. The adhesive according to claim 4, wherein the adhesive further comprises a diluent; and the diluent is an alcohol solvent and an ester solvent.

6. A barrier layer, wherein the barrier layer is formed after coating the adhesive according to any one of claims 1-5 and then subjecting the adhesive to thermal cross-linking, and a temperature of the thermal cross-linking is 80-120°C.

7. A highly transparent flexible high-barrier film, comprising a polymer substrate, an undercoat layer, a silicon oxide deposition layer, and a barrier layer in sequence from bottom to top, wherein the barrier layer is the barrier layer according to claim 6.

8. The highly transparent flexible high-barrier film according to claim 7, wherein a material of the polymer substrate is polyethylene terephthalate, polyethylene naphthalate, polycarbonate, polyamide, polyethylene, or polypropylene, and a thickness of the substrate is 10-150 µm;
the undercoat layer comprises linear silicon-containing polyurethane resin without a benzene ring structure;
the silicon oxide deposition layer is a silicon dioxide deposition layer formed by plasma-enhanced chemical vapor deposition, and has a thickness of 40-80 nm; and
a coating amount of the barrier layer is 1-2 g/m², and a drying temperature thereof is 80-100°C.

9. The highly transparent flexible high-barrier film according to claim 7, wherein the linear silicon-containing polyurethane resin without a benzene ring structure is a polyurethane adhesive obtained by polymerizing dicyclohexylmethane diisocyanate with a polyether diol and dihydroxyl-terminated organosilicon, and then chain-extending with dimethylolpropionic acid and terminating with silanol, and has a coating amount of 1-2 g/m²; and
a thickness of the silicon oxide deposition layer is 50-60 nm.

10. An encapsulating and display film material, wherein the encapsulating and display material is an encapsulating and display material manufactured from the high-barrier film according to any one of claims 7-9.
